# EUROPEAN PATENT APPLICATION

(11) **EP 4 066 778 A1**
(43) Date of publication of application: **05.10.2022**
(21) Application number: 20893918.1
(22) Date of filing: 19.11.2020
(51) Int. Cl.: A61C 7/08

(54) **METHOD FOR PROVIDING ORTHODONTICS TOOL**

(30) Priority: 29.11.2019 JP 2019216619
(71) Applicant: DSi Corporation, Chuo-ku Tokyo 104-0061 (JP)
(72) Inventor: SATO Hiroshi, Tokyo 104-0061 (JP)
(74) Representative: Marks & Clerk LLP
(86) International application number: PCT/JP2020/043205
(87) International publication number: WO 2021/106739

(57) **Abstract**

A method for providing an orthodontic appliance includes: a step of creating three-dimensional data for an auxiliary mouthpiece 2 and three-dimensional data for an orthodontic mouthpiece 3 based on an intraoral shape and a shape and a bonding position of a protruding piece 1 to be bonded to an orthodontic target tooth; a step of forming, based on the three-dimensional data for the auxiliary mouthpiece 2, the auxiliary mouthpiece 2 including a recessed portion 21 that corresponds to the protruding piece 1; and a step of forming, based on the three-dimensional data for the orthodontic mouthpiece 3, the orthodontic mouthpiece 3 including a pressing portion 32 that comes into contact with the protruding piece 1.

## Description

### [Technical Field]

The present invention relates to a method for providing an orthodontic appliance, and particularly relates to a method for precisely performing orthodontic treatment using mouthpieces with a high degree of freedom and with a high efficiency.

### [Background Art]

Conventionally, mouthpiece-type orthodontic appliances have been provided. A mouthpiece is mounted to cover the whole or a part of the dentition. When the mouthpiece is mounted, a pressing force is applied to some teeth in a direction determined in advance. By mounting the mouthpiece for a certain period of time, the positions of the teeth are gradually adjusted. Usually, a dentist makes a series of plans for orthodontic treatment including a plurality of steps, and a supplier forms mouthpieces to be used in respective processes according to the plan. The patient changes the mouthpiece one after another at each step to gradually adjust the dentition to the correct position.

A process for forming the mouthpiece is substantially as follows. The dentist acquires intraoral scan data or the dental model of the patient and makes a plan for orthodontic treatment. According to the intraoral scan data or three-dimensional data of the dental model and the plan for orthodontic treatment, the supplier creates three-dimensional CAD data for the respective mouthpieces to be used in the respective steps in the plan for orthodontic treatment. Based on the three-dimensional CAD data, the mouthpieces are formed with a stereolithography 3D printer or the like that uses a photocurable resin, for example.

Orthodontic treatment that uses a mouthpiece has a problem of having difficulty in efficiently applying an orthodontic force to a tooth that is an orthodontic target. For this point, Patent Literature 1 describes that, at a spot on a tooth on which orthodontic treatment is to be performed, it is possible to freely adjust the magnitude and the direction of the force applied to the tooth by changing the thickness of the mouthpiece.

### [Citation List]

### [Patent Literature]

[Patent Literature 1] Japanese Patent Laid-Open No. 2018-94245

### [Summary of Invention]

### [Technical Problem]

However, the mouthpiece described in Patent Literature 1 has a problem of requiring a special know-how of design. Further, although the magnitude and the direction of the force applied to the tooth can be adjusted by locally changing the thickness of the material, there is a limitation on the adjustment range. Accordingly, it is necessary to make a plan for orthodontic treatment by taking account of this limitation.

The present invention has been made to solve such problems, and it is an object of the present invention to provide a method for providing an orthodontic appliance that can precisely perform orthodontic treatment with a high degree of freedom and with a high efficiency.

### [Solution to Problem]

A method for providing an orthodontic appliance according to one embodiment of the present invention includes: a step of creating three-dimensional data for an auxiliary mouthpiece and three-dimensional data for an orthodontic mouthpiece based on an intraoral shape and a shape and a bonding position of a protruding piece to be bonded to an orthodontic target tooth; a step of forming, based on the three-dimensional data for the auxiliary mouthpiece, the auxiliary mouthpiece including a recessed portion that corresponds to the protruding piece; and a step of forming, based on the three-dimensional data for the orthodontic mouthpiece, the orthodontic mouthpiece including a pressing portion that comes into contact with the protruding piece.

A method for providing an orthodontic appliance according to one embodiment of the present invention includes: a step of forming, based on an intraoral shape and a shape and a bonding position of a protruding piece to be bonded to an orthodontic target tooth, an auxiliary mouthpiece including a recessed portion that corresponds to the protruding piece; and a step of forming, based on the intraoral shape and the shape and the bonding position of the protruding piece to be bonded to the orthodontic target tooth, an orthodontic mouthpiece including a pressing portion that comes into contact with the protruding piece.

An auxiliary mouthpiece according to one embodiment of the present invention includes a recessed portion that corresponds to a protruding piece to be bonded to an orthodontic target tooth.

An orthodontic mouthpiece according to one embodiment of the present invention includes a pressing portion that comes into contact with a protruding piece bonded to an orthodontic target tooth, thus generating a force applied to the orthodontic target tooth.

### [Advantageous Effect of Invention]

The present invention can provide a method for providing an orthodontic appliance that can precisely perform orthodontic treatment with a high degree of freedom and with a high efficiency.

### [Brief Description of Drawings]

[Figure 1A] Figure 1A is a schematic view showing a process of bonding a protruding piece 1 to a target tooth, and is also a cross-sectional view of the target tooth before orthodontic treatment as viewed in the lateral direction.
[Figure 1B] Figure 1B is a view showing a state before an auxiliary mouthpiece 2 is mounted on the dentition.
[Figure 1C] Figure 1C is a view showing a state where the auxiliary mouthpiece 2 is mounted on the dentition.
[Figure 1D] Figure 1D is a view showing a state where the auxiliary mouthpiece 2 is removed from the dentition.
[Figure 2A] Figure 2A is a schematic view showing a process of mounting an orthodontic mouthpiece 3 over the protruding piece 1, and is also a view showing a state before the orthodontic mouthpiece 3 is mounted on the dentition.
[Figure 2B] Figure 2B is a view showing a state where the orthodontic mouthpiece 3 is mounted on the dentition.
[Figure 3] Figure 3 is a view showing another configuration of the orthodontic mouthpiece 3.
[Figure 4] Figure 4 is a view showing another configuration of the orthodontic mouthpiece 3.
[Figure 5] Figure 5 is a perspective view showing an example of the protruding piece 1.
[Figure 6] Figure 6 is a perspective view showing the example of the protruding piece 1.
[Figure 7] Figure 7 is a perspective view showing an example of the auxiliary mouthpiece 2.

### [Description of Embodiment]

Now, a specific embodiment to which the present invention is applied will be described in detail with reference to drawings.

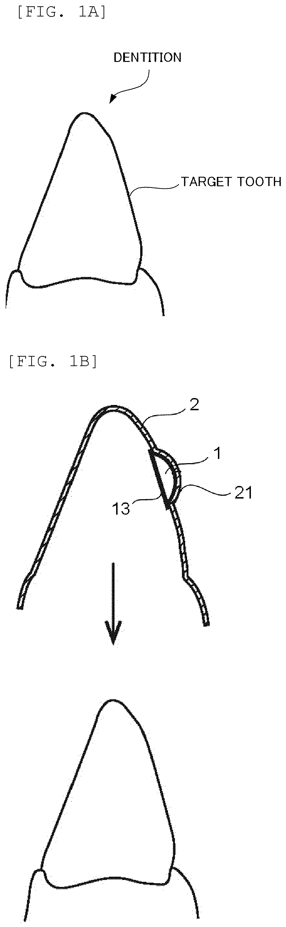

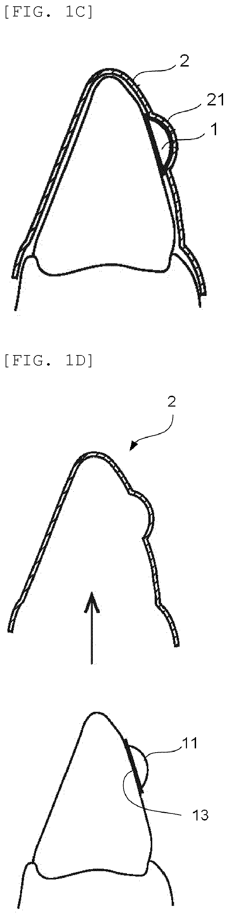

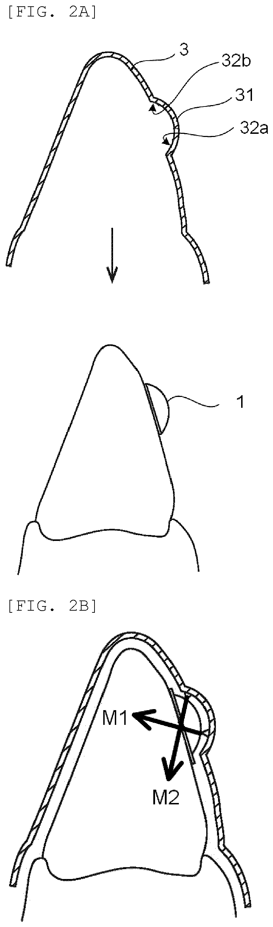

Figure 1A, Figure 1B, Figure 1C, Figure 1D, Figure 2A, and Figure 2B are schematic views for describing a process of orthodontic treatment that uses an orthodontic appliance according to the present invention. The orthodontic treatment basically includes two processes.
(1) A process of bonding a protruding piece 1 to an orthodontic target tooth (hereinafter simply referred to as a "target tooth")
(2) A process of mounting an orthodontic mouthpiece 3 over the protruding piece 1

First, (1) the process of bonding the protruding piece 1 to the target tooth will be described with reference to Figure 1A, Figure 1B, Figure 1C, and Figure 1D.

Figure 1A is a cross-sectional view of the target tooth before orthodontic treatment as viewed in the lateral direction. The right side of the drawing is the outer side of the target tooth, and the left side of the drawing is the inner side of the target tooth.

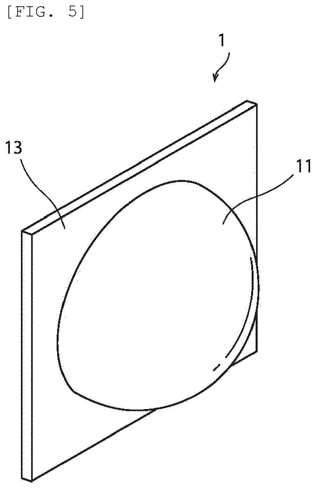

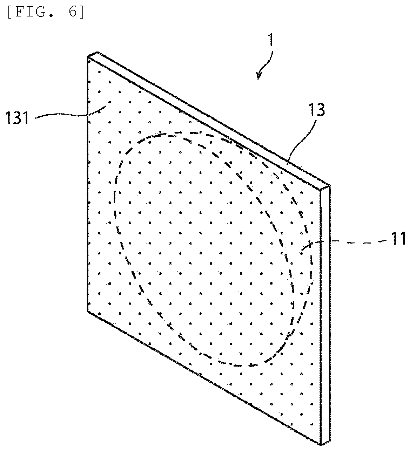

In this process, first, the protruding piece 1 is bonded to the front surface of the target tooth. Figure 5 and Figure 6 show the external appearance of the protruding piece 1. As shown in Figure 5, the protruding piece 1 in the present embodiment includes a protrusion 11 having a hemispherical shape and a base portion 13. As shown in Figure 6, the rear side of the base portion 13 is a bonding surface 131, and adhesive agent is applied to the bonding surface 131 by coating. By causing the bonding surface 131 to be brought into close contact with the front surface of the target tooth, the protruding piece 1 is bonded to the target tooth.

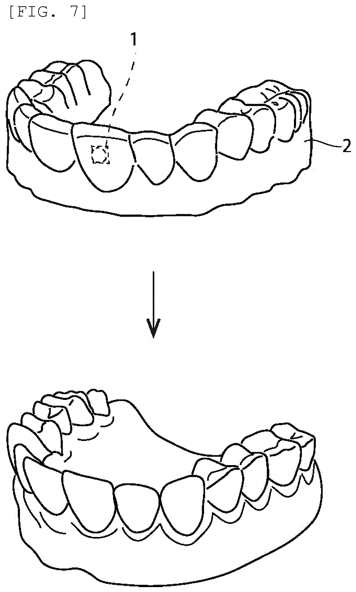

Figure 1B is a view showing a state before an auxiliary mouthpiece 2 is mounted on the dentition. Further, Figure 7 is a perspective view showing such a state. The auxiliary mouthpiece 2 is a mouthpiece used for bonding the protruding piece 1 to the target tooth. The inner surface shape of the auxiliary mouthpiece 2 is formed such that the auxiliary mouthpiece 2 fits on the dentition before orthodontic treatment. A recessed portion 21 is formed at a portion of the auxiliary mouthpiece 2, and the recessed portion 21 has a shape that just accommodates the protruding piece 1 in the recessed portion 21. The protruding piece 1 is set in the recessed portion 21 such that the bonding surface 131 faces the front surface of the target tooth. The protruding piece 1 is provided to the patient in a state of being set in the auxiliary mouthpiece 2 as described above.

Figure 1C is a view showing a state where the auxiliary mouthpiece 2 is mounted on the dentition. In such a state, the bonding surface 131 of the protruding piece 1 is brought into close contact with the front surface of the target tooth, thus causing the protruding piece 1 to be bonded to the target tooth at a predetermined position.

Figure 1D is a view showing a state where the auxiliary mouthpiece 2 is removed from the dentition. Since the protruding piece 1 is bonded to the front surface of the target tooth, when the auxiliary mouthpiece 2 is removed from the dentition, the auxiliary mouthpiece 2 is separated from the protruding piece 1.

To allow the auxiliary mouthpiece 2 to be smoothly and surely mounted on the dentition and to allow the protruding piece 1 to be smoothly and surely separated from the auxiliary mouthpiece 2, it is preferable that a material used for forming the auxiliary mouthpiece 2 be a material having appropriate rigidity and elasticity. For example, it is possible to use a resin, such as a transparent resin having compatibility with a living body. The auxiliary mouthpiece 2 may have any shape provided that the auxiliary mouthpiece 2 is fitted around the target tooth to the extent that the protruding piece 1 can be positioned on the target tooth at a predetermined position. For example, the auxiliary mouthpiece 2 may cover the entire dentition, or may cover only a portion of the dentition or only the front surface or the rear surface of the dentition.

A typical method for forming the auxiliary mouthpiece 2 is as follows. First, three-dimensional CAD data being the base of the auxiliary mouthpiece 2 are created based on data indicating the intraoral shape. The data indicating the intraoral shape include, for example, three-dimensional intraoral scan data, CT data, X-ray data, three-dimensional scan data of the dental model and the like. Next, three-dimensional CAD data for the auxiliary mouthpiece 2 including the recessed portion 21 are created based on the shape of the protruding piece 1 to be used and the position where the protruding piece 1 is planned to be bonded to the target tooth. Lastly, the created three-dimensional CAD data are transferred to a 3D printer to output the auxiliary mouthpiece 2.

For a material used for forming the protruding piece 1, it is also possible to use a transparent resin or the like having compatibility with a living body. The protrusion 11 that the protruding piece 1 includes is not limited to the protrusion 11 having the above-mentioned hemispherical shape. The protruding piece 1 may include the protrusion 11 having any shape, such as a quadrangular shape (a conical shape, a pyramid shape). The shape of the bonding surface 131 is not limited to a rectangular shape, and may be suitably changed.

Next, (2) the process of mounting the orthodontic mouthpiece 3 over the protruding piece 1 will be described with reference to Figure 2A and Figure 2B.

Figure 2A is a view showing a state before the orthodontic mouthpiece 3 is mounted on the dentition. The protruding piece 1 is already bonded to the target tooth. The orthodontic mouthpiece 3 is a mouthpiece used for performing orthodontic treatment by applying a predetermined force to the target tooth. The inner surface shape of the orthodontic mouthpiece 3 may be formed to apply any orthodontic force to the target tooth as in the case of a conventional orthodontic mouthpiece, or may be formed to be fitted to the current dentition without generating an orthodontic force. A recessed portion 31 that corresponds to the protruding piece 1 is formed at a portion of the orthodontic mouthpiece 3. Pressing portions 32 are provided to the recessed portion 31. In the present embodiment, the plurality of pressing portions 32 (pressing portion 32a and pressing portion 32b) formed into a convex shape are provided. However, the shape and the number of pressing portions 32 may be suitably determined. That is, it is sufficient to form the recessed portion 31 such that a portion of the orthodontic mouthpiece 3 comes into contact with the protrusion 11. Contact points of the recessed portion 31 with the protrusion 11 are the pressing portions 32.

Figure 2B is a view showing a state where the orthodontic mouthpiece 3 is mounted on the dentition. The pressing portion 32a and the pressing portion 32b come into contact with the protrusion 11 of the protruding piece 1 and hence, orthodontic forces M (M1 and M2) are generated to perform orthodontic treatment on the target tooth.

In a case where the pressing portions 32 having a convex shape are provided as in the case of the present embodiment, the direction and the magnitude of the orthodontic force M can be easily adjusted by changing the position and the size of the pressing portion 32. It is also possible to adjust the orthodontic force M also by changing the thickness or the shape of the recessed portion 31.

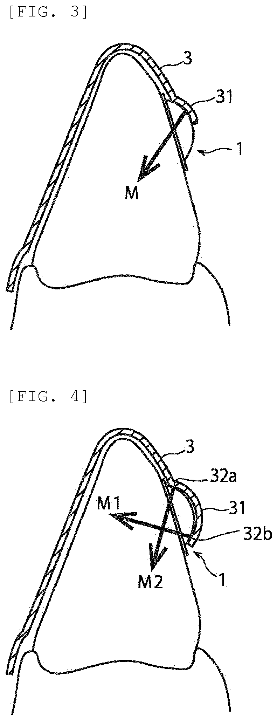

Figure 3 is a view showing another configuration of the orthodontic mouthpiece 3. In this example, the recessed portion 31 is formed to cover at least a portion of the protruding piece 1, and a contact point (or a contact surface) of the recessed portion 31 with the protrusion 11 serves as the pressing portion 32, thus generating the orthodontic force M.

Figure 4 is a view showing another configuration of the orthodontic mouthpiece 3. In this example, the inner portion of the recessed portion 31 comes into contact with the protrusion 11 at one or more contact points (or contact surfaces), thus forming one or more pressing portions 32. In an example shown in Figure 4, two pressing portions 32 are formed, thus generating orthodontic forces M1, M2.

A typical method for forming the orthodontic mouthpiece 3 is as follows. First, three-dimensional CAD data being the base of the orthodontic mouthpiece 3 are created based on data indicating the intraoral shape. The data indicating the intraoral shape include, for example, three-dimensional intraoral scan data, CT data, X-ray data, three-dimensional scan data of the dental model and the like. Next, based on the bonding position and the shape of the protruding piece 1, three-dimensional CAD data for the orthodontic mouthpiece 3 including the recessed portion 31 and the pressing portions 32 are created. Lastly, the created three-dimensional CAD data are transferred to the 3D printer to output the orthodontic mouthpiece 3.

For a material used for forming the orthodontic mouthpiece 3, for example, it is possible to use a resin, such as a transparent resin having compatibility with a living body. By adjusting the thickness of the material at least at the recessed portion 31 and a portion around the recessed portion 31, it is possible to adjust orthodontic forces. When the thickness of the material is increased, orthodontic forces that can be applied to the target tooth via the protruding piece 1 are increased and hence, it is possible to move the target tooth more significantly.

According to the present embodiment, the protruding piece 1 that is bonded to the target tooth comes into contact with the pressing portions 32 of the orthodontic mouthpiece 3 and hence, it is possible to apply the orthodontic forces M to the target tooth. By adjusting the position where the protruding piece 1 is bonded and the position where the pressing portions 32 are formed, it is possible to precisely and flexibly set the orthodontic forces M. Accordingly, it is possible to perform orthodontic treatment that cannot be achieved by a conventional orthodontic mouthpiece, that is, it is possible to precisely perform orthodontic treatment with a high degree of freedom and with a high efficiency.

For example, in conventional mouthpiece orthodontics, it was difficult or impossible to generate an orthodontic force in a direction toward an occlusal surface side such as the orthodontic force M1 shown in Figure 2B and Figure 4. To perform such orthodontic treatment, it was necessary to adopt wire orthodontics. However, according to the present embodiment, it is possible to generate an orthodontic force in a direction toward the occlusal surface side also with mouthpiece orthodontics. In the same manner, in the present embodiment, it is also possible to achieve a technique that was difficult or impossible for conventional mouthpiece orthodontics to achieve, that is, it is possible to apply a moment substantially about the tooth axis to the target tooth. Accordingly, it is possible to perform orthodontic treatment in which the target tooth is rotated.

According to the present embodiment, the orthodontic mouthpiece 3 can efficiently transfer orthodontic forces to the target tooth. Accordingly, it is possible to allow the orthodontic mouthpiece 3 to have a higher orthodontic force than the conventional orthodontic mouthpiece. Alternatively, it is possible to achieve an orthodontic force with a thinner material equivalent to the orthodontic force of the conventional mouthpiece.

Further, according to the present embodiment, even if the protruding piece 1 is separated from the target tooth, it is possible to easily provide the auxiliary mouthpiece 2 and the protruding piece 1 again provided that latest design data for the auxiliary mouthpiece 2 are provided. Accordingly, it is possible to install the protruding piece 1 again at the exact same position.

The present invention is not limited to the above-mentioned embodiment, and may be suitably modified without departing from the gist of the present invention. For example, the shape of the protruding piece 1, the shape of the recessed portion 21 or 31, the position where the protruding piece 1 comes into contact with the recessed portion 31, the shape of a contact portion, a material used for forming the respective components and the like may be suitably changed according to the purpose or the like of orthodontic treatment.

### [Reference Signs List]

- 1: protruding piece
- 11: protrusion
- 13: base portion
- 131: bonding surface
- 2: auxiliary mouthpiece
- 21: recessed portion
- 3: orthodontic mouthpiece
- 31: recessed portion
- 32 (32a, 32b): pressing portion

## Claims

1. A method for providing an orthodontic appliance, the method comprising:
a step of creating three-dimensional data for an auxiliary mouthpiece and three-dimensional data for an orthodontic mouthpiece based on an intraoral shape and a shape and a bonding position of a protruding piece to be bonded to an orthodontic target tooth;
a step of forming, based on the three-dimensional data for the auxiliary mouthpiece, the auxiliary mouthpiece including a recessed portion that corresponds to the protruding piece; and
a step of forming, based on the three-dimensional data for the orthodontic mouthpiece, the orthodontic mouthpiece including a pressing portion that comes into contact with the protruding piece.

2. A method for providing an orthodontic appliance, the method comprising:
a step of forming, based on an intraoral shape and a shape and a bonding position of a protruding piece to be bonded to an orthodontic target tooth, an auxiliary mouthpiece including a recessed portion that corresponds to the protruding piece; and
a step of forming, based on the intraoral shape and the shape and the bonding position of the protruding piece to be bonded to the orthodontic target tooth, an orthodontic mouthpiece including a pressing portion that comes into contact with the protruding piece.

3. An auxiliary mouthpiece comprising a recessed portion that corresponds to a protruding piece to be bonded to an orthodontic target tooth.

4. An orthodontic mouthpiece comprising a pressing portion that comes into contact with a protruding piece bonded to an orthodontic target tooth, thus generating a force applied to the orthodontic target tooth.
